# EUROPÄISCHE PATENTSCHRIFT

(11) **EP 2 275 287 B1**
(45) Veröffentlichungstag und Bekanntmachung des Hinweises auf die Patenterteilung: **06.01.2016**
(21) Anmeldenummer: 10007359.2
(22) Anmeldetag: 15.07.2010
(51) Int. Cl.: B60D 1/58, G01G 19/08, B60D 1/14, A01F 25/20

(54) **Landmaschine**
Agricultural machine
Machine agricole

(30) Priorität: 16.07.2009 DE 102009033450
(43) Veröffentlichungstag der Anmeldung: 19.01.2011
(73) Patentinhaber: Alois Pöttinger Maschinenfabrik Ges.m.b.H., 4710 Grieskirchen (AT)
(72) Erfinder: Edelbauer, Roland, 4600 Wels (AT); Reininger, Markus, 4753 Taiskirchen (AT); Sandberger, Markus, 4724 Neukirchen am Walde (AT); Weissenböck, Thomas, 4724 Eschenau (AT); Aumayr, Klaus, 4084 St.Agatha (AT); Baldinger, Markus, 4084 St.Agatha (AT)
(74) Vertreter: Thoma, Michael

(56) Entgegenhaltungen:
- EP-A1- 1 982 575
- EP-A2- 1 571 015
- DE-A1- 2 164 783
- DE-A1- 3 541 203
- DE-A1- 10 154 733
- DE-A1-102004 058 829
- DE-U1-202004 006 840

## Beschreibung

Die vorliegende Erfindung betrifft eine Landmaschine mit einem zumindest einachsigen Fahrwerk, das zumindest einen Fahrwerks-Druckmittelzylinder zur Federung, Dämpfung und/oder zum Anheben/Absenken des Fahrwerks aufweist, einer Knickdeichsel zum Anbau an einen Schlepper, die mittels zumindest eines DeichselDruckmittelzylinders in verschiedene Knickstellungen bringbar ist, sowie einer Gewichtserfassungseinrichtung zur Erfassung des Landmaschinengewichts und/oder -beladungszustands.

Bei Ladewagen, Pressenwagen oder anderen Ernteguttransportwagen neigen die Bediener, in der Regel die Schlepperführer, oftmals dazu, den Speicherbehälter für das Erntegut zu überladen. Dies kann einerseits in einer tatsächlichen Überschreitung der Maximalbeladung resultieren, andererseits jedoch auch nur ein relatives Überladen, z.B. dadurch, dass für sehr feuchte Böden zu viel geladen wird, beinhalten, oder zu hohe Erntegutdrücke im Speicherbehälter erzeugen. Um ein solches Überladen zu vermeiden, wurde neben direkten Überwachungsmaßnahmen betreffend den Erntegutspeicher, beispielsweise in Form von Sensoren, die die Füllhöhe abtasten, auch bereits Wiege- bzw. Gewichtserfassungseinrichtungen vorgeschlagen, mittels derer das Gesamtgewicht der Landmaschine bzw. relativ deren Zuladung gemessen wird.

Solche Gewichtserfassungseinrichtungen können grundsätzlich natürlich auch für andere Zwecke sinnvoll sein, beispielsweise um die geladene Erntegutmenge gewichtsmäßig zu erfassen und entsprechend abrechnen zu können. Andererseits kann in Abhängigkeit des Maschinen- bzw. Zuladegewichts auch eine Steuerung von Maschinenparametern vorgenommen werden, beispielsweise können zusätzliche Fahrwerksachsen abgesenkt werden, um bei zunehmendem Gewicht dieses besser zu verteilen und keine zu hohen Aufstandsdrücke am Boden entstehen zu lassen.

Beispielsweise zeigt die Druckschrift DE 101 54 736 A1 einen Düngerstreuer mit einem auf einem Fahrwerksrahmen angeordneten Vorratsbehälter, bei dem Wiegezellenelemente der Fahrwerksachse und der Zugöse der Deichsel zugeordnet sind. Die Wiegezellenelemente sind dabei in Vertiefungen in der Zugöse angeordnet. Aus den Signalen der Wiegezellenelemente wird das im Vorratsbehälter befindliche Gewicht ermittelt. Die spezielle Anordnung der Wiegezellenelemente in der Zugöse bedingt jedoch eine spezielle Ausbildung der Deichsel; insbesondere können schon existente Maschinen kaum oder nur sehr aufwändig nachgerüstet werden.

Weiterhin ist aus der DE 202 17 399 U1 ein Futtermischwagen mit einem Schneidwerk bekannt, an dessen Rückwand Sensoren zur Erfassung eines Futterpakets vorgesehen sind. Zudem ist dem Mischraum eine elektronische Wiegeeinrichtung zugeordnet, um das eingebrachte Futter zu kontrollieren. Auch hier ist eine einfache Nachrüstbarkeit nicht gegeben. Zudem reagiert das System empfindlich auf ungleichmäßige Beladungen. Aus der DE 697 10 969 T2 ist weiterhin ein Anbaugerät bekannt, bei dem eine Gewichtsmessung über die Hubvorrichtung des Schleppers erfolgt, was jedoch natürlich ungeeignet für Landmaschinen mit eigenem Fahrwerk wie beispielsweise Ladewagen ist.

Aus der Schrift DE 20 2004 006 840 U1 ist ein gattungsgemäßer Baufahrzeugtransporter in Form eines Tandem-Anhängers bekannt, bei dem der Abstand der Tandem-Fahrwerksachsen in Abhängigkeit von an der Deichsel erfassten Drucksignalen und an den Tandem-Achsen erfassten Drucksignalen verstellt werden kann, um die Tandem-Fahrwerksachsen näherungsweise gleichmäßig zu belasten.

Weiterhin ist aus der DE 101 54 733 ein Düngerstreuer bekannt, bei dem zwischen der Fahrwerksachse und dem Achsbock ein Wiegezellenelement sowie zwischen der Zugdeichsel und der Zugöse ein weiteres Wiegezellenelement vorgesehen sind, mittels derer das im Vorratsbehälter befindliche Gewicht ermittelt werden kann.

Ferner beschreibt die Schrift DE 35 41 203 A1 eine Scheibenegge mit einem einachsigen Fahrwerk, die über eine abknickbare Deichsel an einen Schlepper anhängbar ist. Die genannte Knickdeichsel wird dabei zusammen mit der Achse des Fahrwerks verstellt, um für eine Transportstellung die Bodenfreiheit zu erhöhen.

Die Schrift EP 19 82 575 zeigt eine Ballenpresse mit einem mehrachsigen Fahrwerk, die eben mittels einer abknickbaren Deichsel an einen Schlepper angehängt werden kann.

Die Schrift DE 21 64 783 A1 zeigt einen Ladewagen, dessen einachsiges Fahrwerk über einen Hydraulikzylinder höhenverstellbar ist.

Der vorliegenden Erfindung liegt daher die Aufgabe zugrunde, eine verbesserte Landmaschine der genannten Art zu schaffen, die Nachteile des Standes der Technik vermeidet und Letzteren in vorteilhafter Weise weiterbildet. Vorzugsweise soll eine präzise, einfach nachrüstbare und gegenüber ungleichmäßiger Beladung umempfindliche Gewichtsmessung ermöglicht werden.

Erfindungsgemäß wird diese Aufgabe durch eine Landmaschine gemäß Anspruch 1 gelöst. Bevorzugte Ausgestaltungen der Erfindung sind Gegenstand der abhängigen Ansprüche.

Dabei wird einerseits der in einem Fahrwerkszylinder herrschende Druck und andererseits der in einem Knickdeichselzylinder herrschende Druck bestimmt, um auch bei ungleichmäßig verteiltem Ladegut eine präzise Bestimmung des Maschinengewichts bzw. Ladezustands zu ermöglichen. Durch die mehreren Druckmesspunkte werden sowohl die Stützlast an der Deichsel als auch die Achsaufstandslast berücksichtigt, so dass sich ein ungleichmäßiger Ladezustand nicht auf die Genauigkeit der Gewichts- bzw. Ladezustandsbestimmung auswirken kann. Andererseits kann durch die Verwendung der Druckmitteldrücke für die Gewichtsbestimmung eine einfache Nachrüstung auch schon bestehender Geräte erreicht werden, da kein Umbau irgendwelcher mechanischer Teile erforderlich ist und sich die entsprechenden Druckmesser in einfacher Weise in die Hydraulikkreise an den geeigneten Druckmesspunkten einbauen lassen.

Die Gewichtserfassungseinrichtung kann hierbei grundsätzlich sowohl statisch als auch dynamisch arbeitend ausgebildet sein. Sind keine hohen Genauigkeiten erforderlich, kann insbesondere eine statische Gewichtserfassung ausreichend sein. Andererseits ist es von Vorteil, wenn die Druckmitteldrücke zumindest teilweise dynamisch erfasst und/oder ausgewertet werden, um Reibungs- und Klemmeffekte zu eliminieren bzw. deren Einfluss auf das Messergebnis zu reduzieren.

In Weiterbildung der Erfindung kann hierbei vorgesehen sein, an verschiedenen Stellen der Landmaschine unterschiedlich zu messen, insbesondere an zumindest einem Messpunkt eine statische Messung und an zumindest einem weiteren Messpunkt eine dynamische Messung vorzusehen.

In Weiterbildung der Erfindung kann hierbei vorteilhafterweise die Druckmessung am Fahrwerk dynamisch erfolgen. Andererseits kann es an der Knickdeichsel ausreichend sein, eine statische Messung durchzuführen. Grundsätzlich könnte in alternativer Ausführung jedoch auch vorgesehen sein, auch an der Knickdeichsel eine dynamische Messung und/oder am Fahrwerk eine statische Messung vorzusehen, wobei vorteilhafterweise jedoch zumindest an den fahrwerksseitigen Druckmesspunkten dynamisch gemessen wird, da sich dort häufig Verspannungs- und Mikroklemmzustände ergeben können.

In Weiterbildung der Erfindung ist der zumindest eine dem Fahrwerk zugeordnete Druckmesser als dynamischer Druckmessbaustein ausgebildet und/oder die Auswerteeinheit derart ausgebildet, dass das Drucksignal des dem Fahrwerk zugeordneten Druckmessers dynamisch während eines sich ändernden Belastungszustands ausgewertet wird. Insbesondere kann das Druckmesssignal während des Befüllvorgangs herangezogen werden, um die entsprechende Achslast zu bestimmen.

Alternativ oder zusätzlich kann der zumindest eine dem Deichsel-Druckmittelzylinder zugeordnete Druckmesser als statischer Druckmessbaustein ausgebildet und/oder die Auswerteeinheit derart ausgebildet sein, dass das Drucksignal an der Knickdeichsel auch während eines statischen Belastungszustands herangezogen wird, um die Stützkraft an der Knickdeichsel zu bestimmen. Alternativ oder zusätzlich kann das Drucksignal des an der Knickdeichsel vorgesehenen Druckmessers jedoch auch während eines dynamischen Belastungszustands, insbesondere während des Befüllvorgangs erfasst und ausgewertet werden, so dass auch an der Knickdeichsel eine dynamische Messung erfolgt.

Vorteilhafterweise werden dabei an der Deichsel sowohl Abwärts- als auch Aufwärtskräfte bestimmt; Letztere können sich zumindest theoretisch dann ergeben, wenn der Transportgutspeicher gänzlich einseitig am der Deichsel abgewandten Ende beladen wird und/oder das Schlepper-Maschinen-Gespann über eine Kuppe fährt.

In Weiterbildung der Erfindung kann hierbei der Druckmesser, der dem Knickdeichselzylinder zugeordnet ist, derart ausgebildet und/oder angeordnet sein, dass der Druckmitteldruck sowohl auf der Ausfahrseite als auch auf der Einfahrseite des Deichseldruckmittelzylinders erfasst wird und/oder ein Differenzdruck zwischen den Ausfahr- und Einfahrseiten des Druckmittelzylinders aufgenommen wird. Wird ein herkömmlicher, doppelt wirkender Druckmittelzylinder mit einer Kolbenstange und einem Kolben verwendet, kann insbesondere die in der Ringkammer und der Kolbenkammer herrschenden Drücke gemessen und zur Bestimmung der an der Deichsel herrschenden Stützkraft herangezogen werden.

Je nach Ausbildung des Fahrwerks kann es grundsätzlich ausreichend sein, an nur einem dem Fahrwerk zugeordneten Druckmittelzylinder den Druck abzugreifen. Vorteilhafterweise jedoch wird der die Stützkräfte am Fahrwerk wiedergebende Druck jedoch sowohl rechts und links abgegriffen.

Insbesondere können in Weiterbildung der Erfindung dem Fahrwerk zumindest zwei, zu verschiedenen Seiten der Landmaschine hin angeordnete Fahrwerks-Druckmittelzylinder zugeordnet sein, denen jeweils ein Druckmesser zugeordnet ist, so dass die Stützdrücke und damit -kräfte auf verschiedenen Seiten der Landmaschine bestimmt werden können.

Die Auswerteeinheit der Gewichtserfassungseinrichtung bestimmt aus den verschiedenen Drucksignalen der Druckmesser das Gewicht der Landmaschine bzw. der Zuladung, was beispielsweise durch einfache Subtraktion des Vorher-/Nachher-Zustands erfolgen kann. Das bestimmte Gewicht der Landmaschine bzw. deren Zuladung wird vorteilhafterweise zumindest mittels einer Anzeigevorrichtung angezeigt, wobei die Anzeigevorrichtung vorteilhafterweise am Schlepper positionierbar ist, um den Schlepperführer laufend über den aktuellen Beladezustand zu informieren. Alternativ oder zusätzlich kann jedoch auch eine Ausgabeeinrichtung an der Landmaschine selbst vorgesehen sein, beispielsweise auch in Form eines Speichers, in den der Gewichts- bzw. Beladezustand geschrieben wird und dann später abrufbar ist.

Weiterhin wird das bestimmte Gewicht der Landmaschine und/oder deren Zuladung jedoch auch zu weiter gehenden Steuerungsfunktionen herangezogen. Bei einem mehrachsigen Fahrwerk mit zumindest eine liftbaren Achse wird das Anheben bzw. Absenken in Abhängigkeit der Drucksignale der Druckmesser und/oder in Abhängigkeit einer hieraus abgeleiteten Größe, insbesondere des bestimmten Gewichts, gesteuert.

Erfindungsgemäß ist dabei eine automatische lastabhängige Steuerung der zumindest einen liftbaren Achse vorgesehen. Erreicht die Last bzw. Beladung der Landmaschine einen bestimmten Wert, wird die zumindest eine liftbare Achse abgesenkt. Fällt hingegen die Last bzw. Beladung unter ein vorbestimmtes Niveau ab, beispielsweise weil ein Teil der Ladung gelöscht wird, kann die zumindest eine liftbare Achse automatisch angehoben werden. Erfindungsgemäß zeichnet sich die Landmaschine aus durch eine Lasterfassungsvorrichtung zur Erfassung der Last und/oder der Beladung der Landmaschine, und eine Steuervorrichtung zur automatischen Steuerung der Hub- und/oder Lastvorrichtung in Abhängigkeit der erfassten Last und/oder Beladung derart, dass die liftbare Achse bei Erreichen einer vorbestimmten Last und/oder Beladung abgesenkt wird. Vorteilhafterweise ist die Steuervorrichtung dabei auch derart ausgebildet, dass bei Unterschreiten einer vorbestimmten Last und/oder Beladung, die von der zuvor genannten Last und/oder Beladungsgrenze abweichen, vorzugsweise jedoch damit übereinstimmen kann, die zumindest eine liftbare Achse angehoben wird.

Das An- und Absenken kann hierbei beispielsweise in Abhängigkeit eines Durchschnittswertes der Achslasten gesteuert werden. In Weiterbildung der Erfindung kann jedoch das genannte Achslast-Steuermodul auch derart ausgebildet sein, dass immer dann, wenn an einer Achse die erfasste Achslast einen vorbestimmten Wert übersteigt, die liftbare Achse abgesenkt wird und/oder nicht angehoben wird. Alternativ oder zusätzlich wird dabei auch die Deichsel-Stützkraft zur Steuerung der liftbaren Achsen herangezogen. Hierzu besitzt die Steuervorrichtung ein Stützkraft-Steuermodul, das die Hub-/Senkvorrichtung für die zumindest eine liftbare Achse in Abhängigkeit der erfassten Stützkraft ansteuert, insbesondere dergestalt, dass die liftbare Achse abgesenkt wird, wenn die erfasste Stützkraft einen vorbestimmten Schwellwert überschreitet und/oder die liftbare Achse anhebt, wenn die erfasste Stützkraft einen zweiten vorbestimmten Schwellwert unterschreitet, der vorteilhafterweise mit dem zuvor genannten ersten Schwellwert übereinstimmen kann.

In Weiterbildung der Erfindung kann insbesondere vorgesehen sein, dass die Steuervorrichtung das Anheben und Absenken der zumindest einen liftbaren Achse automatisch sowohl in Abhängigkeit der erfassten Achslast als auch in Abhängigkeit der erfassten Stützkraft steuert. Die Steuervorrichtung kann hierbei vorteilhafterweise eine Steuerungslogik beinhalten, die die liftbare Achse absenkt, wenn zumindest eine der erfassten Lasten, d.h. Achslast und/oder Stützlast einen jeweiligen Grenzwert überschreiten und/oder die liftbare Achse nur dann anhebt, wenn beide der genannten Lasten Achslast und Stützlast unter ihren jeweiligen Grenzwert abfallen.

In bevorzugter Weiterbildung der Erfindung kann dabei ein weggesteuertes Absenken und/oder Anheben der liftbaren Achse erfolgen insbesondere dergestalt, dass die liftbare Achse mit zunehmend größer werdender Last zunehmend weiter abgesenkt wird. Die Steuervorrichtung kann hierzu in Weiterbildung der Erfindung eine Wegsteuervorrichtung aufweisen, die in Abhängigkeit der Größe der erfassten Last und/oder Beladung die liftbare Achse unterschiedlich weit absenkt. Hierbei können unterschiedliche Last-Stellweg-Abhängigkeiten realisiert sein, beispielsweise kann ein zweistufiges Absenken vorgesehen sein.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht einer Landmaschine in Form eines Ladewagens nach einer vorteilhaften Ausführung der Erfindung, wobei das Fahrwerk des Ladewagens hydraulisch ausgebildet ist und der Ladewagen eine hydraulische Knickdeichsel aufweist,
- Fig. 2:: eine ausschnittsweise, vergrößerte Darstellung des Fahrwerks des Ladewagens aus Fig. 1 in einer Seitenansicht, die die Abstützung der Fahrwerksachsen über Hydraulikzylinder zeigt, und
- Fig. 3:: eine perspektivische Ansicht der Knickdeichsel des Ladewagens aus Fig. 1, die in der gezeichneten Ausführung mittels zweier Hydraulikzylinder in verschiedenen Knickstellungen verstellbar ist.

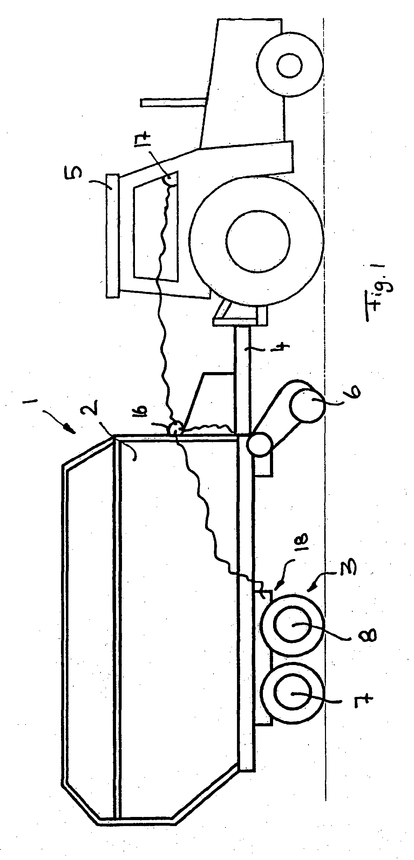

Der in Fig. 1 gezeigte Ladewagen 1 umfasst einen Erntegutspeicher 2, der mittels eines Fahrwerks 3, das in der gezeichneten Ausführung zweiachsig ausgebildet ist, am Boden abgestützt ist.

Über eine Deichsel 4 ist der Ladewagen 1 an einen Schlepper 5 anbaubar.

In an sich bekannter Weise umfasst der Ladewagen 1 eine Aufnahmevorrichtung 6, um Erntegut vom Boden aufzunehmen. Diese Aufnahmevorrichtung 6 kann beispeilsweise eine Pickup mit einer umlaufenden Stachelwalze sowie einen weiteren Förderrotor umfassen.

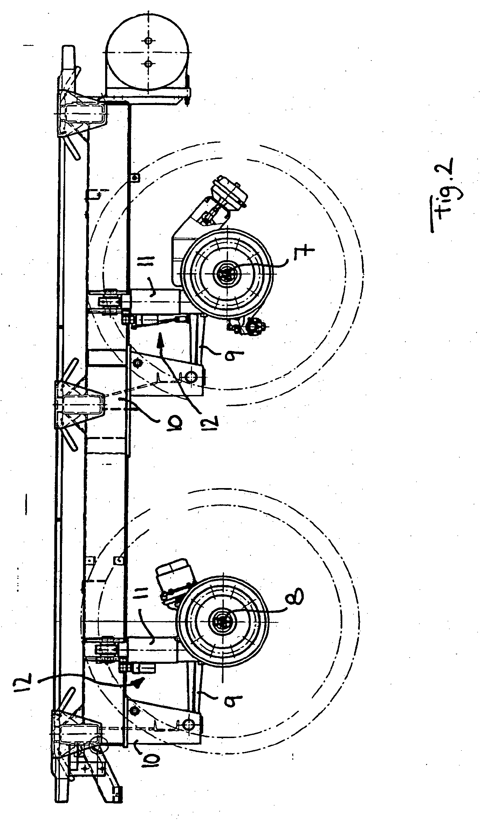

Wie Fig. 2 zeigt, sind in der gezeichneten Ausführung des Ladewagen 1 dessen Fahrwerksachsen 7, 8 mittels jeweils einer Schwingeneinrichtung 9 pendelnd bzw. höhenveränderlich an einem Fahrwerksrahmen 10 aufgehängt, so dass die Fahrwerksachsen 7 und 8 sich auf und ab bewegen können.

Hierbei sind die Fahrwerksachsen 7 und 8 mittels Hydraulikzylindern 11 gegenüber dem Fahrwerksrahmen 10 abgestützt, so dass Auf- und Abbewegung der Fahrwerksachsen 7 und 8 mit entsprechenden Einfahr- und Ausfahrbewegungen der genannten Hydraulikzylinder 11 einher gehen. Die genannten Hydraulikzylinder 11 können hierbei grundsätzlich verschiedene Funktionen übernehmen, beispielsweise können sie als Dämpfer wirken und/oder Federbeine bilden, die von Druckspeichern beaufschlagt sind und ein Ein- und Ausfedern der Fahrwerksachsen steuern, und/oder als Hubvorrichtung wirken, um die Fahrwerksachsen 7 und 8 gegenüber dem Fahrwerksrahmen 10 absenken bzw. anheben zu können.

Vorteilhafterweise ist dabei jede Fahrwerksachse 7 und 8 sowohl rechts als auch links - bei Betrachtung in Fahrtrichtung - mittels jeweils zumindest eines Hydraulikzylinders 11 abgestützt, wobei nach einer möglichen Ausführung der Erfindung auch eine Einzelradaufhängung und/oder eine paarweise Radaufhängung vorgesehen sein kann, die ein Ein- und Ausfedern auf unterschiedlichen Maschinenseiten unabhängig zulässt. Auch in diesem Fall ist vorteilhafterweise jedoch zu unterschiedlichen Maschinenseiten hin jeweils zumindest ein Hydraulikzylinder 11 vorgesehen.

Den genannten Hydraulikzylindern 11 ist hierbei jeweils zumindest ein Druckmesser 12 zugeordnet, der den Hydraulikdruck in der Druckkammer des Hydraulikzylinders 11 misst, die die Auflagekräfte bzw. Stützkräfte aufbringt. In der in Fig. 2 gezeigten Einbausituation ist dies die Kolbendruckkammer, wobei der Drucksensor bzw. Druckmesser 12 nicht zwangsweise in der genannten Kolbendruckkammer angeordnet sein muss. Vielmehr ist es in vorteilhafter Weiterbildung der Erfindung auch möglich, den Druckmesser 12 in eine zu der genannten Druckkammer führende Druckleitung einzubauen und/oder an anderer Stelle des Hydraulikdruckkreises vorzusehen, an der ein dem Druck in der genannten Druckkammer entsprechender Druck herrscht. In Weiterbildung der Erfindung kann der genannte Druckmesser 12 jedoch auch in den genannten Hydraulikzylinder 11 integriert sein und/oder unmittelbar an der Druckkammer positioniert sein.

Der Druckmesser 12 gibt ein Drucksignal ab, welches dem in dem jeweiligen Hydraulikzylinder 11 des Fahrwerks 3 herrschenden Druck entspricht und/oder diesen eindeutig identifizierbar angibt.

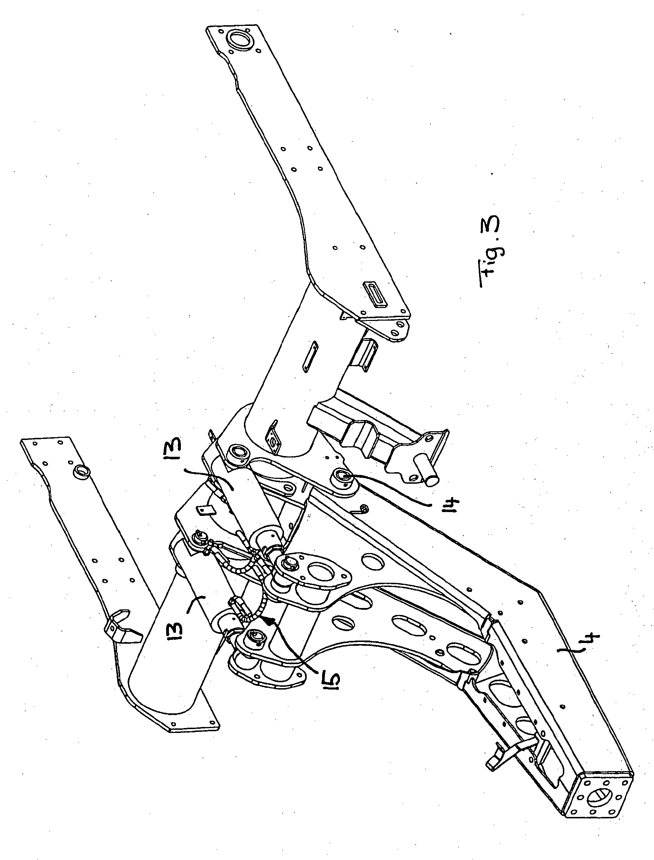

Wie Fig. 3 zeigt, sind auch an der Knickdeichsel 4 zwei Hydraulikzylinder 13 vorgesehen, mittels derer die Knickstellung der genannten Deichsel 4 verstellt werden kann und/oder die Knickbewegungen der genannten Deichsel 11 federn und/oder dämpfen. Gemäß Fig. 3 ist die Knickdeichsel 4 um eine liegende, sich im Wesentlichen quer zur Fahrtrichtung erstreckende Knickachse 14 an einem maschinenrahmenfesten Teil schwenkbar angelenkt. Die genannten Hydraulikzylinder 13 sind bezüglich der genannten Knickachse 14 beabstandet angelenkt, so dass Knick- bzw. Schwenkbewegungen der Deichsel 11 um die Knickachse 14 mit einer entsprechenden Einfahr- oder Ausfahrbewegung der Hydraulikzylinder 13 einher geht.

Auch den Hydraulikzylindern 13 ist jeweils ein Druckmesser 15 zugeordnet, um den Stützdruck, der durch die Hydraulikzylinder 13 aufgebracht wird, zu messen. Bei entsprechender Parallel- oder Hintereinanderschaltung der beiden gezeichneten Hydraulikzylinder 13 kann auch ein Druckmesser 15 ausreichend sein. Nach einer Weiterbildung der Erfindung kann dabei sowohl die Ringseite der Hydraulikzylinder 13 als auch die Kolbenseite der Hydraulikzylinder 13 für die Druckmessung herangezogen werden, d.h. es können mit entsprechenden Druckmessbausteinen sowohl die Drücke in der Ringkammer als auch in der Kolbenkammer bestimmt werden.

Wie Fig. 1 zeigt, werden die Drucksignale der Druckmesser 12 und 15 von einer Auswerteeinheit 16 verarbeitet, um die an den Fahrwerksachsen 7 und 8 und an der Knickdeichsel 4 herrschenden Stützkräfte zu bestimmen, um hieraus wiederum das Gewicht des Ladewagens 1 und/oder dessen Zuladung zu bestimmen.

Die Auswerteeinheit 16 kann hierbei am Ladewagen 1 selbst angeordnet sein, ggf. jedoch auch am Schlepper 5 positioniert sein. Vorteilhafterweise wird von der Auswerteeinheit 16 das bestimmte Gewicht auf einer Anzeigevorrichtung 17 angezeigt, die vorteilhafterweise am Führerstand des Schleppers 5 positioniert ist, um den Schlepperführer stets über die aktuelle Zuladung des Ladewagens und/oder dessen Gesamtgewicht zu informieren.

## Patentansprüche

1. Landmaschine mit einem zumindest einachsigen Fahrwerk (3), das zumindest einen Fahrwerks-Druckmittelzylinder (11) zur Federung, Dämpfung und/oder zum Anheben/Absenken des Fahrwerks (3) aufweist, einer Knickdeichsel (4) zum Anbau an einen Schlepper, der zumindest ein Deichsel-Druckmittelzylinder (13) zum Verkippen, Federn und/oder Dämpfen von Knickbewegungen der Knickdeichsel zugeordnet ist, sowie einer Gewichtserfassungseinrichtung (18) zur Erfassung des Landmaschinengewichts und/oder Beladungszustands, wobei die Gewichtserfassungseinrichtung (18) Druckmesser (12) zur Messung der Druckmitteldrücke in den Fahrwerks- und Deichsel-Druckmittelzylindern (11; 13) und Abgabe entsprechender Drucksignale aufweist, anhand derer von einer Auswerteeinheit (16) das Landmaschinengewicht und/oder der Landmaschinenbeladezustand bestimmbar ist, dardurch gekennzeichnet, dass die Landmaschine in Form eines Lade- und/oder Pressenwagens mit einer Aufnahmevorrichtung (6) zum Aufnehmen von Erntegut vom Boden ausgebildet ist, und wobei das Fahrwerk (3) mehrachsig ausgebildet ist und zumindest eine liftbare Fahrwerksachse (7, 8) aufweist, die von einer Hubvorrichtung vom Boden anhebbar und auf den Boden absenkbar ist, wobei eine Steuervorrichtung ein Stützkraft-Steuermodul zur automatischen Steuerung der Hubvorrichtung in Abhängigkeit der erfassten Last derart, dass die liftbare Fahrwerksachse (7, 8) dann abgesenkt wird, wenn an einer Fahrwerksachse (7, 8) die erfasste Achslast einen vorbestimmten Wert übersteigt und/oder die an der Knickdeichsel (4) erfasste Deichselstützkraft einen vorbestimmten Schwellwert überschreitet, aufweist.

2. Landmaschine nach dem vorhergehenden Anspruch, wobei die Gewichtserfassungseinrichtung (18) zumindest teilweise dynamisch arbeitend ausgebildet ist.

3. Landmaschine nach einem der vorhergehenden Ansprüche, wobei der zumindest eine dem Fahrwerk (3) zugeordnete Druckmesser (12) als dynamischer Druckmessbaustein ausgebildet ist und/oder die Auswerteeinheit (16) das Drucksignal des dem Fahrwerk (3) zugeordneten Druckmessers (12) dynamisch während eines sich ändernden Betriebszustands, insbesondere während eines Befüllvorgangs, auswertet.

4. Landmaschine nach einem der vorhergehenden Ansprüche, wobei der zumindest eine der Knickdeichsel (4) zugeordnete Druckmesser (15) als statischer Druckmessbaustein ausgebildet ist und/oder die Auswerteeinheit (16) das Drucksignal des der Knickdeichsel (4) zugeordneten Druckmessers (15) statisch während eines statischen Belastungszustands auswertet.

5. Landmaschine nach einem der vorhergehenden Ansprüche, wobei der der Knickdeichsel (4) zugeordnete Druckmesser (15) derart ausgebildet und/oder angeordnet ist, dass der Druckmitteldruck sowohl auf der Ausfahrseite als auch auf der Einfahrseite des Deichsel-Druckmittelzylinders (13) erfasst wird, und/oder einen Differenzdruck zwischen den Ausfahr- und Einfahrseiten des genannten Deichsel-Druckmittelzylinders (13) aufnimmt, anhand dessen von der Auswerteeinheit (16) die Deichselstützkraft bestimmbar ist.

6. Landmaschine nach einem der vorhergehenden Ansprüche, wobei das Fahrwerk (3) zumindest zwei zu verschiedenen Seiten der Landmaschine hin angeordnete Fahrwerks-Druckmittelzylinder (11) aufweist, denen jeweils ein Druckmesser (12) zugeordnet ist, wobei die Auswerteeinheit (16) anhand der Drucksignale der mehreren einer Fahrwerksachse (7; 8) zugeordneten Druckmesser (12) die an der jeweiligen Fahrwerksachse (7) auftretende Fahrwerkslast bestimmt.

7. Landmaschine nach einem der vorhergehenden Ansprüche, wobei die Auswerteeinheit (16) eine Anzeigevorrichtung (17) zur Anzeige des Landmaschinengewichts und/oder des Landmaschinenbeladezustands aufweist.

8. Landmaschine nach einem der vorhergehenden Ansprüche, wobei die Auswerteeinheit (16) eine elektronische Kommunikationsschnittstelle, vorzugsweise in Form einer CAN-Bus-Schnittstelle, zur Datenweiterverarbeitung aufweist.

## Claims

1. An agricultural machine with an at least single-axle traveling gear (3) which includes at least one traveling gear pressure medium cylinder (11) for cushioning, damping and/or for lifting/lowering the traveling gear (3), an articulated drawbar (4) for attachment to a tractor, to which at least one drawbar pressure medium cylinder (13) is associated for tilting, cushioning and/or damping articulating movements of the articulated drawbar, and a weight detection device (18) for detecting the weight of the agricultural machine and/or the loading condition, wherein the weight detection device (18) includes pressure gages (12) for measuring the pressure medium pressures in the traveling gear and drawbar pressure medium cylinders (11; 13) and for outputting corresponding pressure signals by means of which the weight and/or the loading condition of the agricultural machine can be determined by an evaluation unit (16), **characterized in that** the agricultural machine is formed in the form of a self-loading and/or press wagon with a pick-up device (6) for picking up crops from the ground, and wherein the traveling gear (3) is of the multi-axle type and includes at least one liftable traveling gear axle (7, 8) which by a lifting device can be lifted from the ground and be lowered to the ground, wherein a control device includes a supporting force control module for automatically controlling the lifting device in dependence on the detected load such that the liftable traveling gear axle (7, 8) is lowered, when on a traveling gear axle (7, 8) the detected axle load exceeds a predetermined value and/or the drawbar supporting force detected at the articulated drawbar (4) exceeds a predetermined threshold value.

2. The agricultural machine according to the preceding claim, wherein the weight detection device (18) is formed to operate at least partly dynamically.

3. The agricultural machine according to any of the preceding claims, wherein the at least one pressure gage (12) associated to the traveling gear (3) is formed as dynamic pressure measurement module and/or the evaluation unit (16) dynamically evaluates the pressure signal of the pressure gage (12) associated to the traveling gear (3) during a changing operating condition, in particular during a filling operation.

4. The agricultural machine according to any of the preceding claims, wherein the at least one pressure gage (15) associated to the articulated drawbar (4) is formed as static pressure measurement module and/or the evaluation unit (16) statically evaluates the pressure signal of the pressure gage (15) associated to the articulated drawbar (4) during a static load condition.

5. The agricultural machine according to any of the preceding claims, wherein the pressure gage (15) associated to the articulated drawbar (4) is formed and/or arranged such that the pressure medium pressure is detected both on the extension side and on the retraction side of the drawbar pressure medium cylinder (13), and/or picks up a differential pressure between the extension and retraction sides of said drawbar pressure medium cylinder (13), by means of which the drawbar supporting force can be determined by the evaluation unit (16).

6. The agricultural machine according to any of the preceding claims, wherein the traveling gear (3) includes at least two traveling gear pressure medium cylinders (11) arranged towards different sides of the agricultural machine, to each of which a pressure gage (12) is associated, wherein the evaluation unit (16) determines the traveling gear load occurring at the respective traveling gear axle (7) by means of the pressure signals of the several pressure gages (12) associated to a traveling gear axle (7; 8).

7. The agricultural machine according to any of the preceding claims, wherein the evaluation unit (16) includes a display device (17) for displaying the weight and/or loading condition of the agricultural machine.

8. The agricultural machine according to any of the preceding claims, wherein the evaluation unit (16) includes an electronic communication interface, preferably in the form of a CAN bus interface, for further data processing.

## Revendications

1. Machine agricole, comportant un châssis (3) doté d'au moins un essieu qui présente au moins un cylindre de milieu de pressurisation de châssis (11) destiné à la suspension, à l'amortissement et/ou à la montée/descente du châssis (3), comportant une flèche pliable (4) destinée à être montée sur une hercheuse, à laquelle est associée au moins un cylindre de milieu de pressurisation de flèche (13) destiné au basculement, à la suspension et/ou à l'amortissement de mouvements de pliage de la flèche pliable, ainsi qu'un moyen d'enregistrement de poids (18) destiné à enregistrer le poids de la machine agricole et/ou l'état du chargement, le moyen d'enregistrement de poids (18) présentant des manomètres (12) destinés à mesurer les pressions des milieux de pressurisation dans les cylindres de milieu de pressurisation (11 ; 13) de châssis et de flèche et à émettre des signaux de pression correspondants au moyen desquels le poids de la machine agricole et/ou l'état de chargement de la machine agricole peut être déterminé par une unité d'évaluation (16), **caractérisée en ce que** la machine agricole est réalisée sous la forme d'un chariot de chargement et/ou de pressage avec un dispositif de réception (6) destiné à recevoir un produit de récolte du sol, et le châssis (3) étant réalisé avec plusieurs essieux et présentant au moins un essieu de châssis relevable (7, 8) qui peut être relevé du sol et être abaissé au sol par un dispositif de levage, un dispositif de commande présentant un module de commande de force de support destiné à commander automatiquement le dispositif de levage en fonction de la charge enregistrée, de telle sorte que l'essieu de châssis relevable (7, 8) est abaissé lorsque, sur un essieu de châssis (7, 8), la charge d'essieu enregistrée dépasse une valeur prédéterminée et/ou la force de support de flèche enregistrée sur la flèche pliable (4) dépasse une valeur limite prédéterminée.

2. Machine agricole selon la revendication précédente, dans laquelle le moyen d'enregistrement de poids (18) est réalisé pour fonctionner au moins partiellement de manière dynamique.

3. Machine agricole selon une des revendications précédentes, dans laquelle l'au moins un manomètre (12) associé au châssis (3) est réalisé sous la forme d'un module de mesure de pression dynamique et/ou l'unité d'évaluation (16) évalue le signal de pression du manomètre (12) associé au châssis (3) de manière dynamique pendant un état de fonctionnement variable, en particulier pendant un processus de remplissage.

4. Machine agricole selon une des revendications précédentes, dans laquelle l'au moins un manomètre (15) associé à la flèche pliable (4) est réalisé sous la forme d'un module de mesure de pression statique et/ou l'unité d'évaluation (16) évalue le signal de pression du manomètre (15) associé à la flèche pliable (4) de manière statique pendant un état de chargement statique.

5. Machine agricole selon une des revendications précédentes, dans laquelle le manomètre (15) associé à la flèche pliable (4) est réalisé et/ou disposé de telle sorte que la pression du milieu de pressurisation soit enregistrée aussi bien du côté de la sortie que du côté de l'entrée du cylindre de milieu de pressurisation (13) de la flèche, et/ou reçoit une pression différentielle entre les côtés de sortie et d'entrée dudit cylindre de milieu de pressurisation (13) de la flèche, au moyen de laquelle la force de support de la flèche peut être déterminée par l'unité d'évaluation (16).

6. Machine agricole selon une des revendications précédentes, dans laquelle le châssis (3) présente au moins deux cylindres de milieu de pressurisation de châssis (11) disposés vers deux côtés différents de la machine agricole, auxquels respectivement un manomètre (12) est associé, l'unité d'évaluation (16) déterminant la charge de châssis se produisant sur l'essieu de châssis respectif (7), à l'aide des signaux de pression des différents manomètres (12) associés à un essieu de châssis (7; 8).

7. Machine agricole selon une des revendications précédentes, dans laquelle l'unité d'évaluation (16) présente un dispositif d'affichage (17) destiné à afficher le poids de la machine agricole et/ou l'état de chargement de la machine agricole.

8. Machine agricole selon une des revendications précédentes, dans laquelle l'unité d'évaluation (16) présente une interface de communication électronique, de préférence sous la forme d'une interface bus CAN, pour le traitement ultérieur des données.
